# EUROPÄISCHE PATENTSCHRIFT

(11) **EP 1 448 465 B1**
(45) Veröffentlichungstag und Bekanntmachung des Hinweises auf die Patenterteilung: **07.03.2007**
(21) Anmeldenummer: 02782915.9
(22) Anmeldetag: 16.10.2002
(51) Int. Cl.: B65G 47/84

(54) **VORRICHTUNG ZUM VEREINZELN VON GETRÄNKEFLASCHEN MIT HALSKRAGEN**
DEVICE FOR SEPARATING DRINKS BOTTLES WITH NECK COLLARS
DISPOSITIF DE SEPARATION DE BOUTEILLES DE BOISSON PRESENTANT UNE COLLERETTE

(30) Priorität: 30.10.2001 DE 10153069
(43) Veröffentlichungstag der Anmeldung: 25.08.2004
(73) Patentinhaber: KHS AG, 44143 Dortmund (DE)
(72) Erfinder: FRIEDE, Peter, 21635 Jork (DE); BESTMANN, Matthias, 22457 Hamburg (DE); KIEFER, Margit, 20095 Hamburg (DE)
(86) Internationale Anmeldenummer: PCT/EP2002/011536
(87) Internationale Veröffentlichungsnummer: WO 2003/037760

(56) Entgegenhaltungen:
- EP-A- 1 041 034
- WO-A-01/42113
- DE-U- 20 015 846
- US-A- 4 378 665

## Beschreibung

Die Erfindung betrifft Vorrichtungen nach dem Oberbegriff des Anspruch 1.

Getränkeflaschen durchlaufen bei Ihrer Verarbeitung nacheinander verschiedene Maschinen wie z. B. Waschmaschinen, Inspektoren, Füllmaschinen und Verschließmaschinen. In diesen Maschinen, insbesondere wenn es sich um karussellartig umlaufende Maschinen handelt, laufend sie auf vorgegebener Maschinenteilung. Zwischen den Maschinen werden sie üblicherweise von Transporteuren auf Stoß transportiert. Am Ende eines Transporteurs und vor der Übergabe an eine Maschine ist daher eine Vereinzelungsvorrichtung erforderlich, die die auf Stoß ankommenden Flaschen vereinzelt und unter Beschleunigung auf den Abstand der Maschinenteilung bringt, mit dem sie dann auf die Maschine bzw. üblicherweise auf die Taschen eines vorgeschalteten Einlaufsterns übergeben werden.

Kunststoffflaschen mit Halskragen, wie sie sich heute immer mehr durchsetzen, werden üblicherweise durchgehend am Kragen gehandhabt. Zum Vereinzeln derartiger Flaschen ist die gattungsgemäße Vorrichtung geeignet, wie sie sich aus WO 01/42113 A1 ergibt.

Bei dieser Konstruktion werden die Flaschen von einem angetriebenen Rad im Reibeingriff mit der einen Seite der Flaschen beschleunigt, wobei die andere Seite mit ihrem Kragen auf einer die Scheibe im Abstand des Durchmessers des Flaschenhalses umlaufenden Außenschiene gestützt wird, an der die Flaschen abrollen.

Vorteilhaft bei dieser Konstruktion ist der sehr geringe konstruktive Aufwand und der äußerst platzsparende Aufbau. Probleme ergeben sich jedoch hinsichtlich der kippfreien Führung der Flaschen bei der Aufrechterhaltung ihrer stets vertikal zu haltenden Achslage.

Bei der genannten bekannten Konstruktion ist am Umfang der Scheibe eine Nut auf der Höhenlage der Flaschenkragen vorgesehen, die die Kragen sowohl auf der Unterseite als auch auf der Oberseite in Formschlußeingriff hält. Hierdurch wird die sichere Lage der Flaschen gewährleistet. Es ergibt sich aber der Nachteil, daß die Nut genau zur Ausbildung des Kragens passen muß. Da jedoch Flaschen mit stark unterschiedlichen Kragenformen verwendet werden, bei denen beispielsweise Ober- und Unterseite des Kragens parallel oder im Winkel stehen können und auch unterschiedliche Abstände aufweisen können, ist es erforderlich, zur Verarbeitung von Flaschen mit anderen Kragenformen die Scheibe zu wechseln. Außerdem muß die Nut stets die Kragen sehr genau erfassen, um sie genau ausrichten zu können. Dies kann nur durch genaue Abstandseinstellung der Scheibe zur Außenschiene erreicht werden. Daher muß bei der genannten bekannten Konstruktion dieser Abstand ständig nachjustiert werden, was umfangreiche Wartung erforderlich macht.

Die Aufgabe der vorliegenden Erfindung besteht darin, eine gattungsgemäße Vorrichtung zu schaffen, die Halskragenflaschen bei geringem Wartungsaufwand vereinzeln kann.

Diese Aufgabe wird mit den Merkmalen des Anspruches 1 gelöst.

Erfindungsgemäß werden die Flaschen innerhalb des Umfangsbereiches der Scheibe innerhalb dessen sie mit dieser in Reibeingriff stehen, auch auf ihrer zur Scheibe hin liegenden Innenseite auf einer Innenschiene getragen, sind also auf beiden Seiten unter dem Kragen abgestützt und somit stabil gelagert, wobei es hierbei auf genaue Maschineneinstellung nicht ankommt und auch nicht auf die genaue Kragenform. Der Reibeingriff der Scheibe erfolgt auf Höhe des Gewindes der Flaschen. Das Gewinde muß bei allen unterschiedlichen vorkommenden Flaschen exakt gleich sein, um die genormten Schraubkappen aufnehmen zu können. Es lassen sich also mit fester Voreinstellung, ohne Notwendigkeit von Nachjustierungen Flaschen aller Art in exaktem Reibeingriff verarbeiten. Die erfindungsgemäße Vorrichtung kann daher in langfristig stabilem Lauf unterschiedliche Flaschen problemlos vereinzeln.

Die Innenschiene kann feststehend unterhalb der Scheibe angeordnet sein. Dann kann es allerdings zu Kippneigung der Flaschen kommen, da diese im Bereich des Gewindes durch Reibeingriff angetrieben werden, während sie unterhalb des Kragens durch Reibeingriff mit der Innenschiene gebremst werden. Um dies zu vermeiden, sind vorteilhaft die Merkmale des Anspruches 2 vorgesehen. Hierbei wird die Innenschiene als Außenflansch der Scheibe mit dieser, also mit dem Reibrand bewegt, wodurch Kipptendenzen im Ansatz vermieden werden.

Vorteilhaft zur Erzeugung hoher Reibwerte sind die Merkmale des Anspruches 3 vorgesehen.

Vorteilhaft sind die Merkmale des Anspruches 4 vorgesehen. Hiermit ergibt sich eine zusätzliche wirkungsvolle Kippsicherung der Flaschen.

In den Zeichnungen ist die Erfindung beispielsweise und schematisch dargestellt, es zeigen:
- Figur 1: Eine Draufsicht auf eine erfindungsgemäße Vorrichtung,
- Figur 2: einen Schnitt nach Linie 2-2 in Figur 1 und
- Figur 3: einen Schnitt gemäß Figur 2 in einer Ausführungsvariante.

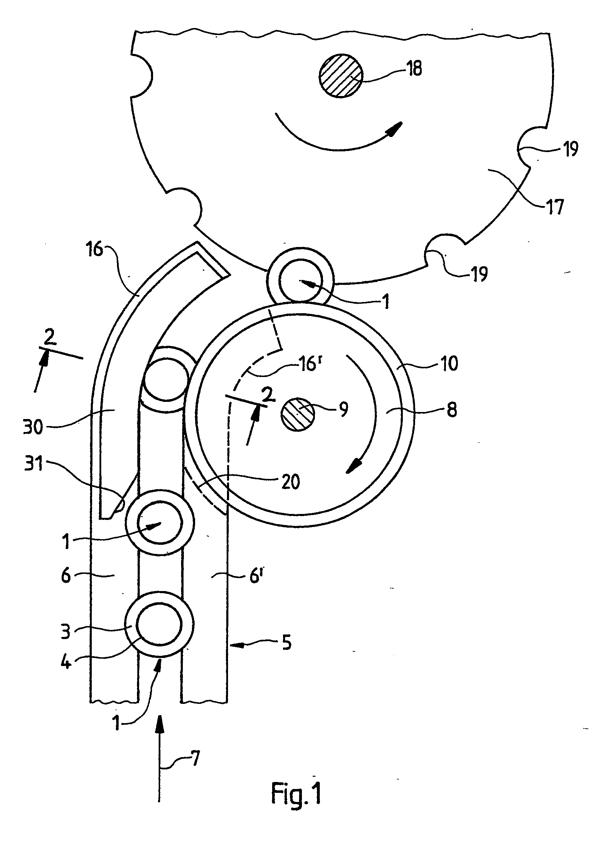

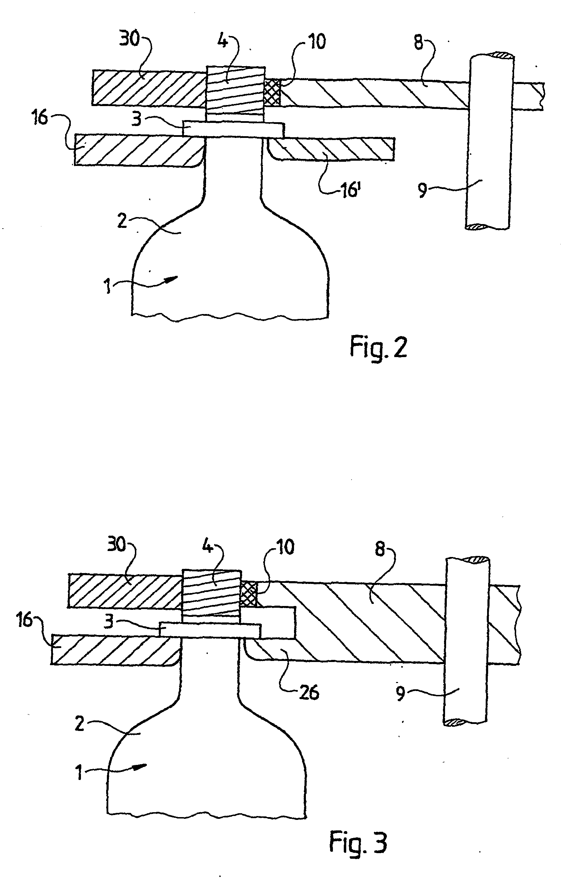

In den Figuren 1 und 2 ist eine erste Ausführungsform einer erfindungsgemäßen Vereinzelungsvorrichtung dargestellt.

Die dargestellte Vorrichtung transportiert Flaschen 1, die zur Aufnahme von Getränken dienen und in heute üblicher Ausbildung als z. B. aus PET (Polyethylentherephthalat) bestehende Kunststofflaschen ausgebildet sind. Die Flaschen weisen in ihrem an den Flaschenkörper 2 (Figur 2) nach oben ansetzenden Halsbereich einen Kragen 3 auf und weisen darüber das in Figur 2 schematisch angedeutete Gewinde 4 auf, das als erhaben ausgebildetes Außengewinde ausgebildet ist und das zur Aufnahme genormter Schraubkappen ausgebildet ist. In der Draufsicht der Figur 1 sind die Flaschen 1 zur zeichnerischen Vereinfachung ohne den Flaschenkörper 2 dargestellt.

Wie Figur 1 zeigt, werden die Flaschen 1 von einem Transporteur 5 zugeführt, der im Ausführungsbeispiel aus zwei parallelen Schienen 6, 6' besteht, die im Abstand des Halsdurchmessers der Flaschen 1 parallel angeordnet sind, und auf denen die Flaschen mit der Unterseite ihrer Kragen 3 hängen. Sie werden auf dem Transporteur 5 ohne Teilung auf Stoß in Richtung des Pfeiles 7 zugeführt.

Im Endbereich des Transporteurs 5 ist in dem aus Figur 2 ersichtlichen Höhenabstand zu diesem eine Scheibe 8 angeordnet, die von einer vertikal stehenden Welle 9 in Pfeilrichtung, also im Uhrzeigersinn angetrieben ist. Die beiden Schienen 6, 6' des Transporteurs 5 sind über einen Umfangsbereich der Scheibe 8 konzentrisch zur Welle 9 gebogen verlaufend als Innenschiene 16' und Außenschiene 16 ausgebildet. Ihre zueinander liegenden Kanten verlaufend dabei weiterhin parallel und im Abstand der Flaschendurchmesser, wobei die Kante der Innenschiene 16' auf dem Umfang der Scheibe 8 liegt, wie dies Figur 1 zeigt. Der unterhalb der Scheibe 8 liegende Bereich der Innenschiene 16' ist hier gestrichelt dargestellt.

Wie Figur 2 zeigt, liegt die Scheibe 8 im Höhenabstand zur Innenschiene 16' auf Höhe des Gewindes 4 der Flasche 1. An ihrem Rand bildet die Scheibe 8 mit einem Reibbelag einen Reibrand 10 aus, der am Gewinde 4 der Flaschen in Reibeingriff gelangt, und diese, an der Innenkante der Außenschiene 16 abrollend beschleunigt.

Anschließend an das Ende der Schienen 16, 16' ist ein um eine Achse 18 in Pfeilrichtung umlaufendes Rad in Form eines Überführungssterns 17 vorgesehen, das mit umfangsbeabstandeten Taschen 19 die Flaschen 1 in ihrem Halsbereich unter dem Kragen 3 aufnimmt und in nicht dargestellter Weise in der Abstandsteilung einer nachfolgend Maschine weiter transportiert.

Figur 3 zeigt im Schnitt der Figur 2 mit soweit möglich denselben Bezugszeichen eine Ausführungsvariante.

Bei dieser Konstruktion läuft die Schien 6 des Transporteurs 5 mit der Außenschiene 16 weiter und zwar in gleicher Weise wie bei der Ausführungsform der Figur 1. Die auf der Seite der Scheibe 8 liegende Schiene 6' des Transporteurs 5 endet jedoch bei 20. Die stationäre Innenschiene 16' fehlt bei dieser Ausführungsform. Statt dessen ist an der Scheibe 8 auf Höhe der Außenschiene 16 unterhalb des Reibrandes 10 und im Höhenabstand zu diesem ein Außenflansch 26 angeordnet, der mit der Scheibe 8 umlaufend den Kragen 3 stützt. In den übrigen Details stimmt diese Ausführungsform mit der in Figur 1 dargestellten Konstruktion überein.

In allen dargestellten Ausführungsformen ist zur zusätzlichen Kippabstützung der Flaschen eine Stützschiene 30 oberhalb der Außenschiene 16 mit nicht dargestellten Mitteln befestigt, die, wie die Figuren 2 und 3 zeigen, am Gewinde 4 der Flaschen 1 anliegt, und zwar auf Höhe des Reibrandes 10 der Scheibe 8. Am Anfang der Stützschiene 30, ist diese mit einer Einlaufschräge 31 versehen, um hier gegebenenfalls schräg stehend ankommende Flaschen in die korrekte vertikale Achslage vorzujustieren. Die Stützschiene 30 kann gegebenenfalls auch weggelassen werden.

## Patentansprüche

1. Vorrichtung zum Vereinzeln von mit einem Transporteur (5) auf Stoß zugeführten, in ihrem Halsbereich unter einem zur Aufnahme von Schraubkappen dienenden Gewinde (4) einen Kragen (3) aufweisenden Getränkeflaschen (1), mit einer um eine vertikale Achse (9) angetriebenen Scheibe (8), die in einem am Ende des Transporteurs beginnenden Umfangsbereich von einer die Kragen tragenden Außenschiene (16) im Abstand des Halsdurchmessers der Flaschen umlaufen ist und die auf ihrem Umfang einen zum Reibeingriff mit den Halsbereichen der Flaschen (1) ausgebildeten Reibrand (10) aufweist, wobei die Flaschen am Ende des Umfangsbereiches an in Maschinenteilung am Umfang eines Rades (17) umlaufende Taschen (19) übergeben werden, **dadurch gekennzeichnet, daß** im Abstand des Halsdurchmessers radial innerhalb der Außenschiene (16) und auf deren Höhe eine Innenschiene (16', 26) angeordnet ist und daß der Reibrand (10) im Höhenabstand oberhalb der Innenschiene (16', 26) auf Höhe der Gewinde (4) der Flaschen (1) angeordnet ist, und dass der Reibrand (10) mit dem Gewinde (4) der Flaschen (1) in einer Wirkverbindung steht.

2. Vorrichtung nach Anspruch 1, **dadurch gekennzeichnet, daß** die Innenschiene als die Scheibe (8) umlaufender, an dieser befestigter Außenflansch (26) ausgebildet ist.

3. Vorrichtung nach Anspruch 1, **dadurch gekennzeichnet, daß** der Reibrand mit einem Reibbelag (10) versehen ist.

4. Vorrichtung nach Anspruch 1, **dadurch gekennzeichnet, daß** parallel zur Außenschiene (16), im Abstand über dieser auf Höhe des Reibrandes (10) eine Stützschiene (30) angeordnet ist.

## Claims

1. Apparatus for separating beverage bottles (1) into singles, the said beverage bottles being supplied edge to edge by a conveyor (5) and including a collar (3) in the neck region below a thread (4), the said thread serving for the receiving of screw-type caps, the said apparatus having a disc (8), which is driven about a vertical axis (9) and, in a circumferential region that begins at the end of the conveyor, is surrounded at the spacing of the neck diameter of the bottles by an outer rail (16) that supports the collars and the said disc includes at its circumference a friction edge (10) that is configured for friction engagement with the neck region of the bottles (1), wherein the bottles are transferred at the end of the circumferential region to pockets (19), which rotate at a machine spacing at the circumference of a wheel (17), **characterised in that** an inner rail (16', 26) is disposed at the spacing of the neck diameter radially inside the outer rail (16) and at its height and **in that** the friction edge (10) is disposed at the vertical spacing above the inner rail (16', 26) at the height of the thread (4) of the bottles (1), and **in that** the friction edge (10) is in operational engagement with the thread (4) of the bottles (1).

2. Apparatus according to claim 1, **characterised in that** the inner rail is in the form of an outer flange (26) that surrounds the disc (8) and is secured to the said disc.

3. Apparatus according to claim, **characterised in that** the friction edge is provided with a friction lining.

4. Apparatus according to claim 1, **characterised in that** a support rail (30) is disposed parallel to the outer rail (16) at a spacing above the said outer rail at the level of the friction edge (10).

## Revendications

1. Dispositif de séparation de bouteilles de boisson (1) acheminées par poussée au moyen d'un transporteur (5), présentant au niveau de leur col une collerette (3) située en-dessous d'une partie filetée (4) destinée à recevoir des bouchons filetés, le dispositif comprenant un disque (8) entraîné autour d'un axe vertical (9) qui, dans une partie périphérique commençant à l'extrémité du transporteur, est entouré d'un rail extérieur (16) portant les collerettes, à distance du diamètre de col des bouteilles, et qui présente sur sa périphérie un bord rugueux (10) destiné à venir s'engager par frottement sur les parties de col des bouteilles (1), les bouteilles étant transférées, à l'extrémité de la zone périphérique, dans des compartiments (19) se déplaçant à la périphérie d'une roue (17) dans une partie de la machine, **caractérisé en ce qu'**un rail intérieur (16', 26) est disposé à distance du diamètre de col, radialement à l'intérieur du rail extérieur (16) et à la même hauteur que celui-ci, et **en ce que** le bord rugueux (10) est disposé à une certaine distance au-dessus du rail intérieur (16', 26), à la hauteur de la partie filetée (4) des bouteilles (1), et **en ce que** le bord rugueux (10) agit conjointement avec la partie filetée (4) des bouteilles (1).

2. Dispositif selon la revendication 1, **caractérisé en ce que** le rail intérieur est conformé en bride extérieure (26) s'étandant à la périphérie du disque (8) et fixée sur celui-ci.

3. Dispositif selon la revendication 1, **caractérisé en ce que** le bord rugueux est pourvu d'une garniture rugueuse (10).

4. Dispositif selon la revendication 1, **caractérisé en ce qu'**un rail de support (30) est monté parallèlement au rail extérieur (16), à distance au-dessus de celui-ci, à hauteur du bord rugueux (10).
